# EUROPEAN PATENT SPECIFICATION

(11) **EP 2 161 932 B1**
(45) Date of publication and mention of the grant of the patent: **13.06.2012**
(21) Application number: 08777075.6
(22) Date of filing: 02.06.2008
(51) Int. Cl.: H04N 7/173, H04N 5/445

(54) **DIGITAL BROADCAST RECEIVER APPARATUS**
DIGITALE RUNDFUNKEMPFANGSVORRICHTUNG
APPAREIL RÉCEPTEUR DE DIFFUSION NUMÉRIQUE

(30) Priority: 29.06.2007 JP 2007172758
(43) Date of publication of application: 10.03.2010
(73) Proprietor: Sharp Kabushiki Kaisha, Osaka-shi, Osaka 545-8522 (JP)
(72) Inventor: KUDO, Noriyuki, Osaka-shi Osaka 545-8522 (JP)
(74) Representative: Hoffmann, Jörg Peter
(86) International application number: PCT/JP2008/060124
(87) International publication number: WO 2009/004881

(56) References cited:
- JP-A- 2006 050 011
- JP-A- 2006 210 966
- JP-A- 2007 013 562
- JP-A- 2007 053 463
- JP-A- 2007 074 566

## Description

### Technical Field

The present invention relates to a digital broadcasting receiving apparatus and particularly to a technique of displaying an electronic program table in the digital broadcasting receiving apparatus.

### Background Art

In a digital broadcasting receiving apparatus for receiving digital television broadcasting, an electronic program table is created based on EPG (electronic program guide) information acquired from a broadcast signal and is displayed as an image on a screen. Then, a user can select a desired program from an electronic program table displayed as an image to view the program and reserve the recording thereof.

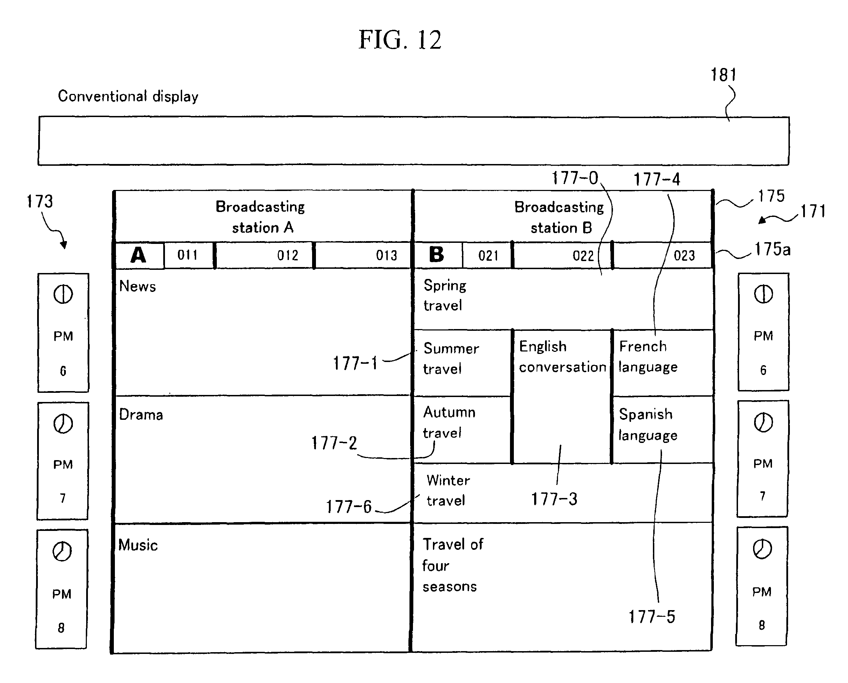

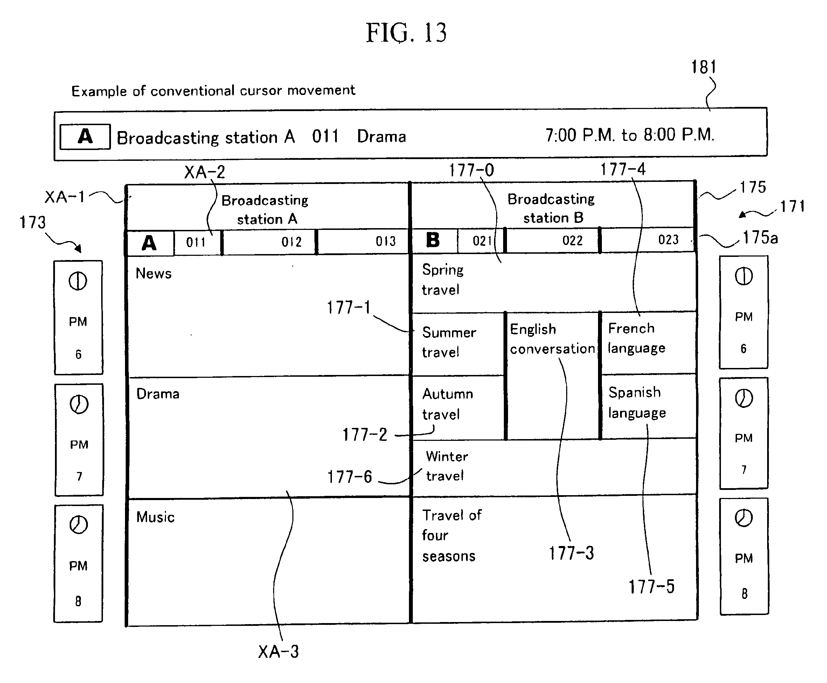

For example, a typical electronic program table is displayed as shown in Figures 12 to 19. Figure 12 is a display of an electronic program table of transition origin. In Figure 12, an electronic program table 171 is configured to have a matrix display structure of a time axis indication 173 and a broadcasting station axis (a channel axis) 175 along which, for example, broadcasting stations when they are provided by the same program provider are placed side by side, and program information (a program name in this case) of a corresponding time and broadcasting station is displayed in a program area (for example, 177-1 to 5) which is a crossing point of the aforementioned two axes. From the screen of Figure 12, in a program area of a service ID 011 (XA-2) in a broadcasting station A (XA-1) (in the figure, it is shown by adding shadow that focus is placed on a program area XA-3), for example, program information (not shown) of a drama between 7 and 8 p.m. is displayed as shown in Figure 13.

It is noted that in the figure, indications such as XA-n etc. refer to areas and indications such as 177-m etc. refer to program names etc.

In the margin of the electronic program table, a detailed display area is provided, in which as well, information on the focused program may be displayed in large characters. Configuration is made such that all the programs are displayed with the service ID and the time zone as minimum display units, in such a way that in the area of a broadcasting station B on which focus is not placed, for example, a program "Spring Travel" which is integrated as shown by a symbol 177-0 is displayed in the areas of service IDs 021, 022 and 023, or different programs, for example, "Summer Travel" 177-1, "English Conversation" 177-3, and "French Language" 177-4 are displayed in each service ID; further, in the next time zone, for example, "Autumn Travel" 177-2, "English Conversation" 177-3, and "Spanish Language" 177-5 are displayed; and further in the next time zone, for example, a program "Winter Travel" which is integrated as shown by a symbol 177-6 is displayed in the areas of service IDs 021, 022, and 023.

In this occasion, when focus is moved by right cursor, as shown in Figure 14, focus is placed on the broadcasting station B, within which an area XA-6 of "Autumn Travel" 177-2 between 7 and 8 p.m. of the first service ID 021 is focused. Further, when focus is moved by right cursor, as shown in Figure 15, focus remains to be placed on the broadcasting station B, within which a program area XA-8 of "English Conversation" between 7 and 8 p.m. of the second service ID 022 is focused. Further, when focus is moved by right cursor, as shown in Figure 16, focus remains to be placed on the broadcasting station B, within which a program area XA-10 of "Spanish Language" between 7 and 8 p.m. of the third service ID 023 is focused. Further, when focus is moved by up cursor, as shown in Figure 17, focus remains to be placed on the broadcasting station B, within which a program area XA-11 of "French Language" above "Spanish Language" between 7 and 8 p.m. of the third service ID 023 is focused. Further, when focus is moved by up cursor, as shown in Figure 18, focus remains to be placed on the broadcasting station B, within which a program area XA-10 of "Spring Travel" above "Summer Travel" between 6 and 7 p.m. of the first service ID 021 is focused. Further, when focus is moved by down cursor, as shown in Figure 19, focus remains to be placed on the broadcasting station B, within which a program area XA-11 of "Summer Travel" below "Spring Travel" between 6 and 7 p.m. of the first service ID 021 is focused. In this way, in general, configuration is made such that when the cursor is moved on, focus is placed on the program which is present in that direction.

Patent Document 1: JP Patent Publication (Kokai) No. 2002-10162A.

JP 2007 053463 A refers to an apparatus displaying an electronic program guide, wherein the program information is displayed as a program table. The program table has a matrix-form with a time axis and a channel axis. The channel axis is sectioned. Each section is assigned to a channel.

JP 2006 05001 1 A describes a program table in matrix-form with a time axis and a broadcasting station axis. The width of a section assigned to a broadcasting station depends on the number of channels.

JP 2007 074566 A refers to a program table where display columns corresponding to one broadcasting station are summarized. Within the display column of one broadcast station a field introduces the program name of one representation broadcast program. Cylindrical markers are displayed as hint that further channels exist for the same broadcasting station. If a cursor is moved horizontally, another channel assigned to the same display column is displayed as the representation broadcast program. Within the same display column, the widths of the newly selected channel and the previously selected channel change with cursor movement.

### Disclosure of the Invention

### Problems to be Solved by the Invention

By the way, EPG information includes so many programs provided by digital broadcasting that creating an electronic program table based on the EPG information will cause the program display fields to be accordingly subdivided, thereby causing the problem that it is difficult to display all of the electronic program table information so as to be browsable.

It is an object of the present invention to improve the operability to reserve and select any one channel such as a representative channel and to increase the number of stations to be displayed on one screen of an electronic program table without sacrificing browsability. Further, it is also an object to maintain the operability of cursor and the compatibility of display between when all the channels are displayed and when they are summarized and displayed.

### Means for Solving the Problems

One broadcasting station is sectioned by the same supplier, the same TS, and a combination thereof etc. An example thereof includes television channels of one TS and of the same broadcast ID, etc. For example, NHK General and NHK Education etc. are respectively considered to be one broadcasting station.

The present invention is characterized in that, in a program table including representative channels predetermined in each TS and channels other than those, the following display control is performed.

1) The display width of a representative channel is arranged to be explicitly larger than (not less than 1.5 times of) those of channels other than the representative channel. In particular, channels other than the representative channel are configured to have a width within the limits of which even one character, which is of the size of the characters entered in program cells, cannot be displayed.

2) The display area for channels other than the representative channel is disposed at the side (left or right side) of the representative channel such that each broadcasting station, which includes a representative channel and channels other than the representative channel, has an approximately uniform display width.

3) In the above description, the width of a representative channel is set as follows.

In the above description, cells other than that of the representative channel have a width which allows to determine whether or not a cursor is put thereon, and when the cursor is not put on the representative channel, color arrangement of the cells is performed by the same algorithm as that of the representative channel, and when the cursor is put thereon as well, color arrangement of the cells is performed with the same color as when the cursor is put on the representative channel.

### Advantages of the Invention

According to the present invention, compared with a conventional program table, it is possible to display many broadcasting stations in a browsable form within a limited display area on a display screen. Further, it is possible to dispose one service in each broadcasting station with a large area of program cell so as to have a channel width in which program information such as a title can be displayed.

Since only a selected channel is disposed in a large size so that the positional relationship between areas in the cursor movement within one broadcasting station is fixed, it is possible to make the operation feeling while moving a cursor compatible with that of a conventional display scheme in which a representative channel and channels other than the representative channel have a uniform display width, thus providing consistency in user's operation feeling.

Fixing a selected channel will make it possible to move a cursor with the same feeling as before in the cursor movement while effecting a transition of the cursor from a spotted formation to a shared event.

### Brief Description of the Drawings

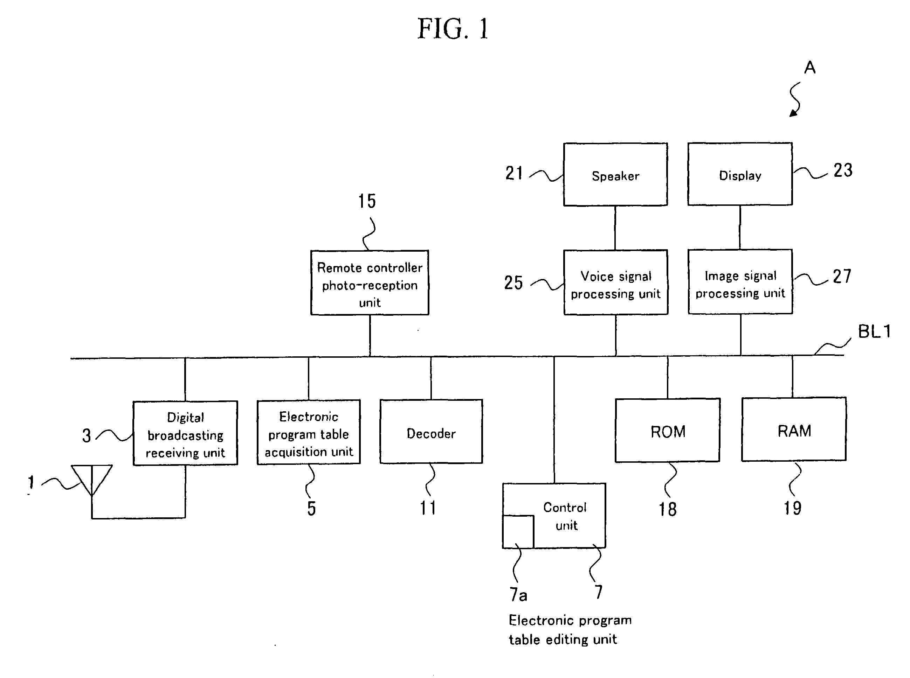

Figure 1 is a function block diagram to show a configuration example of a digital broadcasting receiving apparatus according to an embodiment of the present invention.

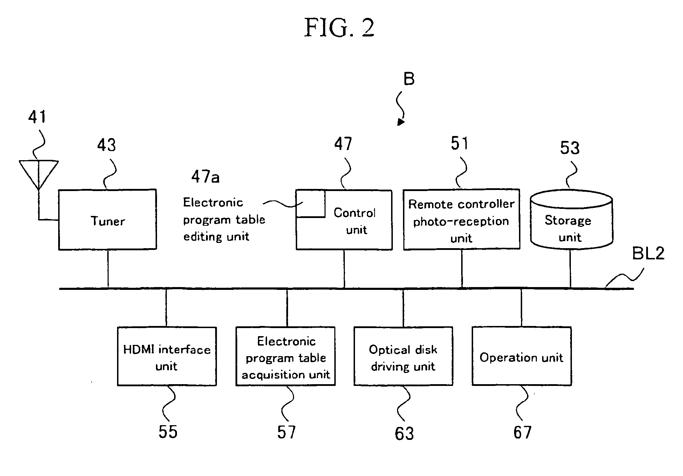

Figure 2 is a function block diagram to show a configuration example of a recording/reproducing apparatus according to an embodiment of the present invention.

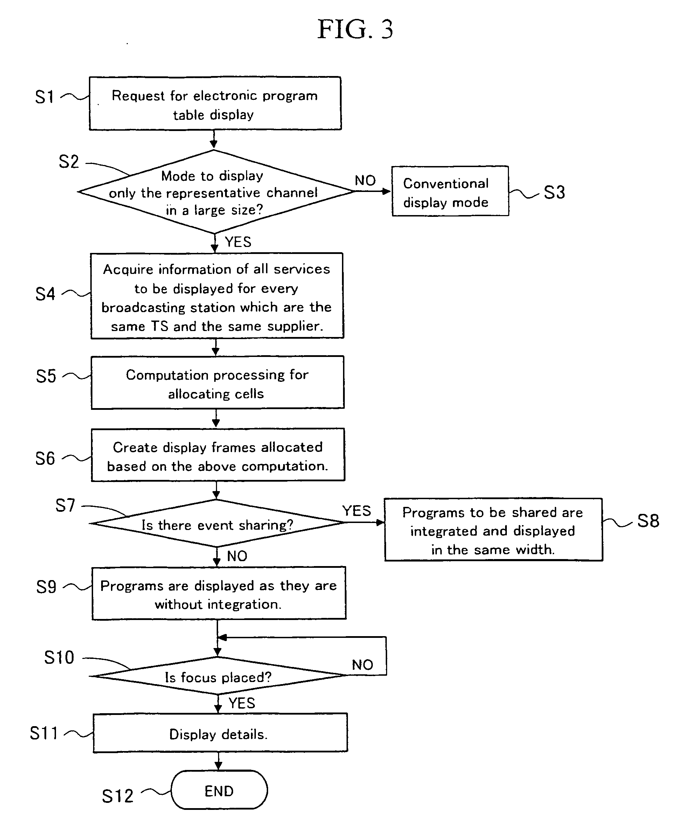

Figure 3 is a flowchart to show an editing process of an electronic program table according to the present embodiment.

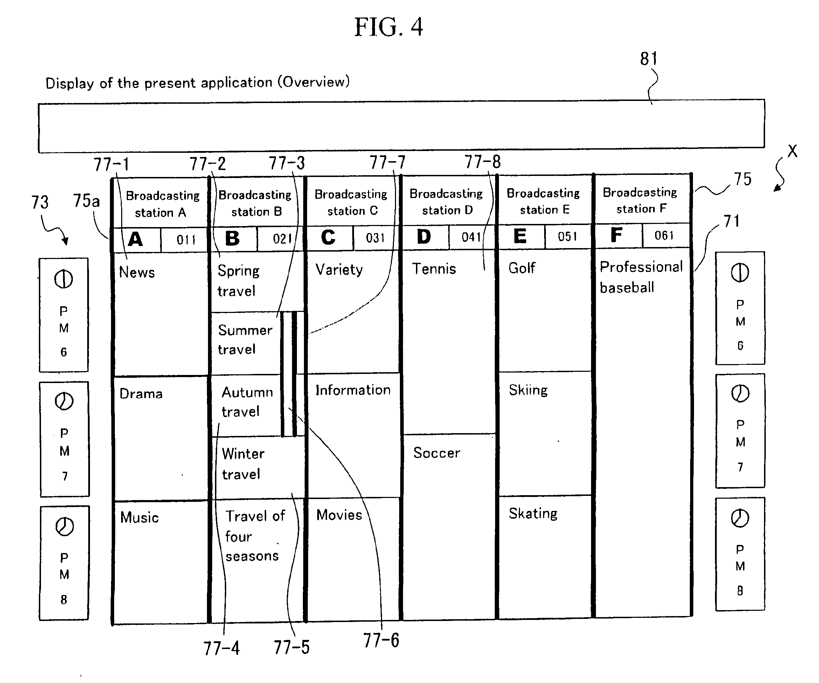

Figure 4 shows a display example of an electronic program table which is edited based on an editing process of electronic program table according to the present embodiment and is displayed on a display.

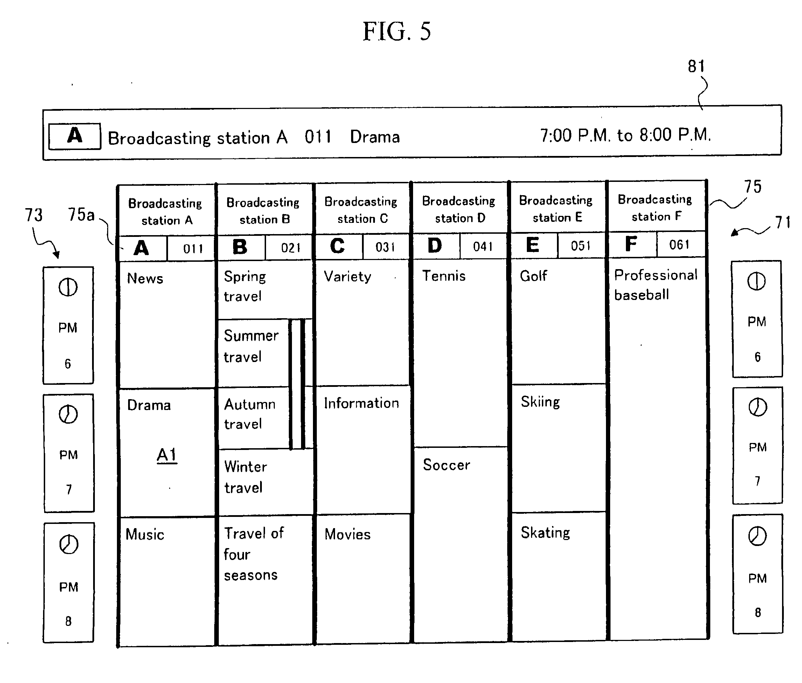

Figure 5 shows a display example of an electronic program table according to the present embodiment.

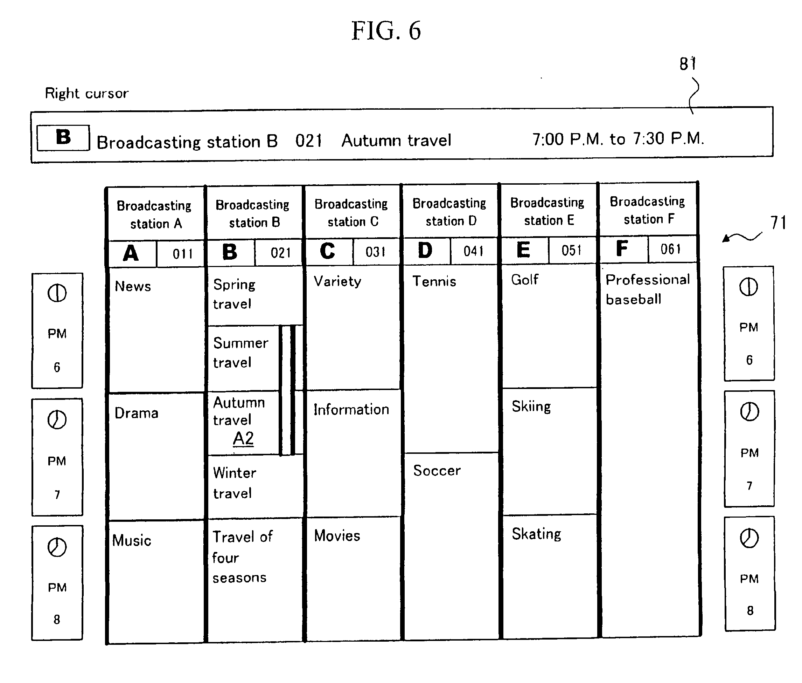

Figure 6 shows a transition example of an electronic program table display according to the present embodiment.

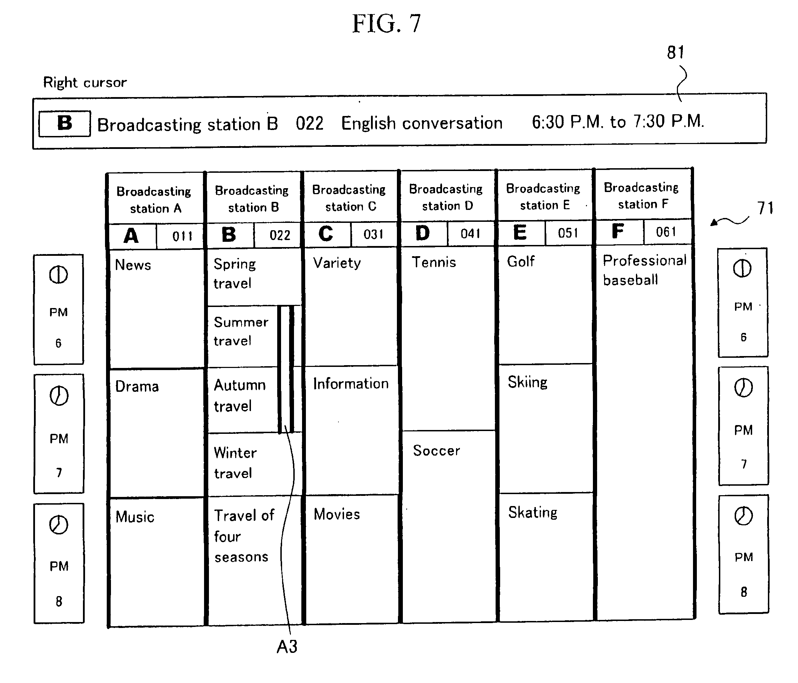

Figure 7 shows a transition example of an electronic program table display according to the present embodiment.

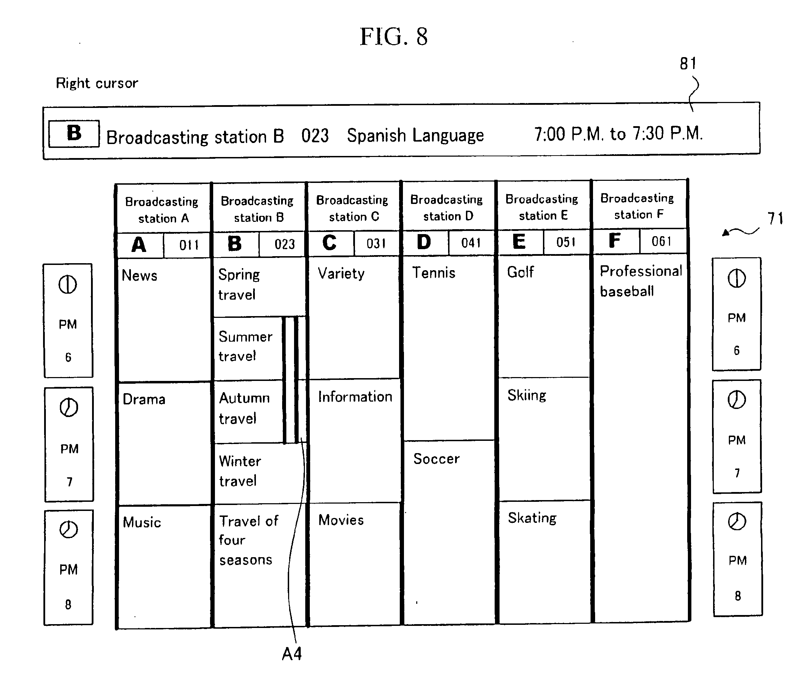

Figure 8 shows a transition example of an electronic program table display according to the present embodiment.

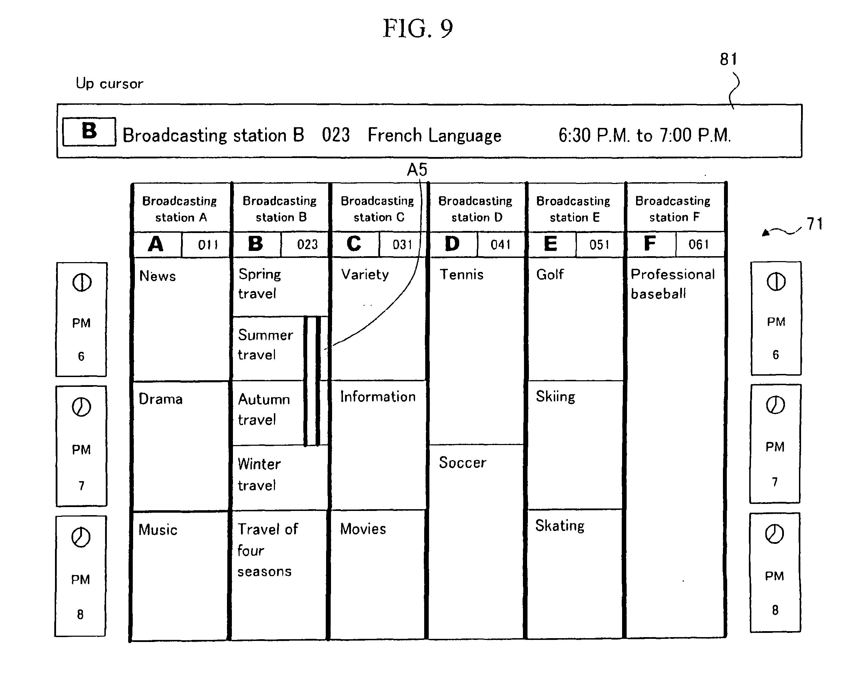

Figure 9 shows a transition example of an electronic program table display according to the present embodiment.

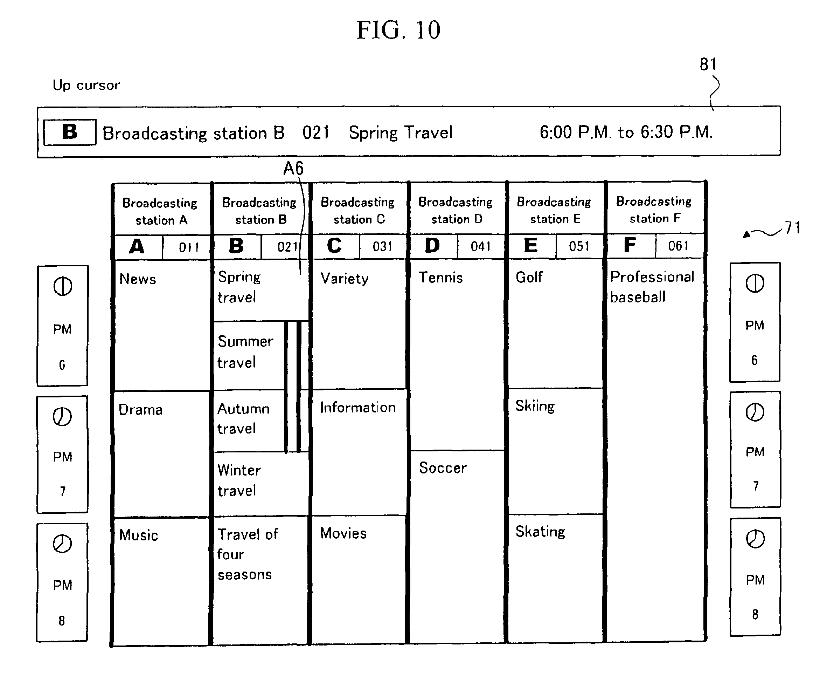

Figure 10 shows a transition example of an electronic program table display according to the present embodiment.

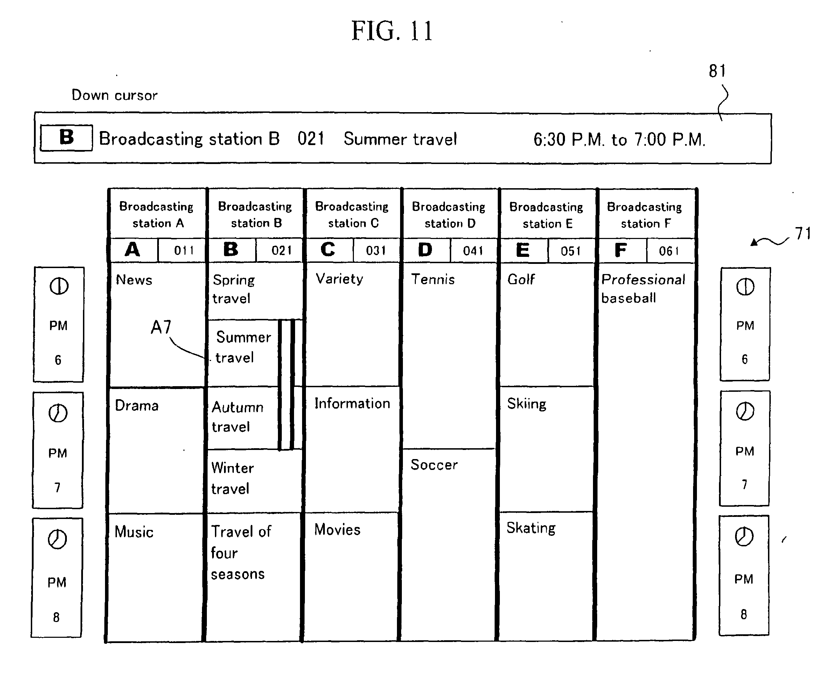

Figure 11 shows a transition example of an electronic program table display according to the present embodiment.
Figure 12 shows a transition example of an electronic program table display according to a mode in which program frames are uniformly allocated.
Figure 13 shows a transition example of an electronic program table display according to a mode in which program frames are uniformly allocated.

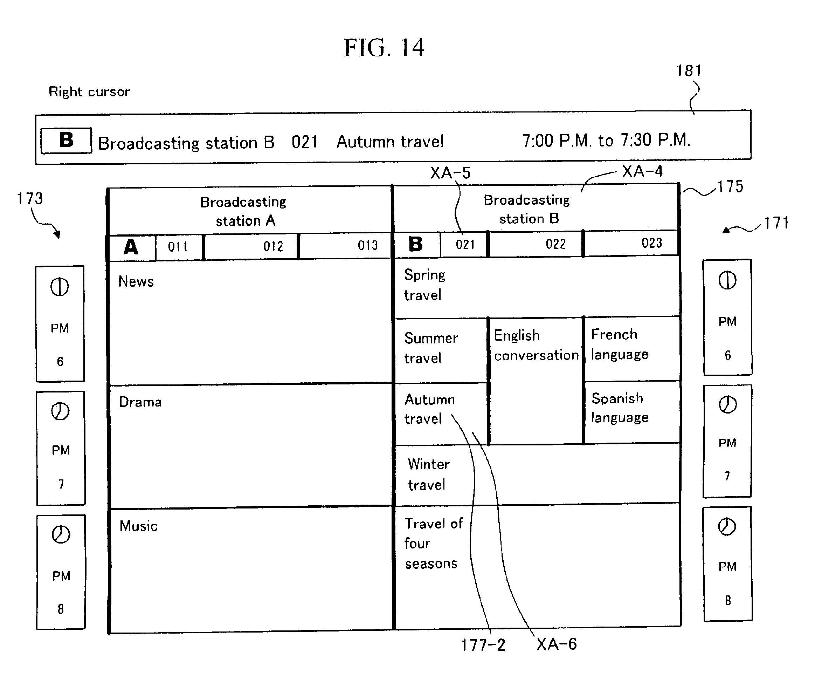

Figure 14 shows a transition example of an electronic program table display according to a mode in which program frames are uniformly allocated.

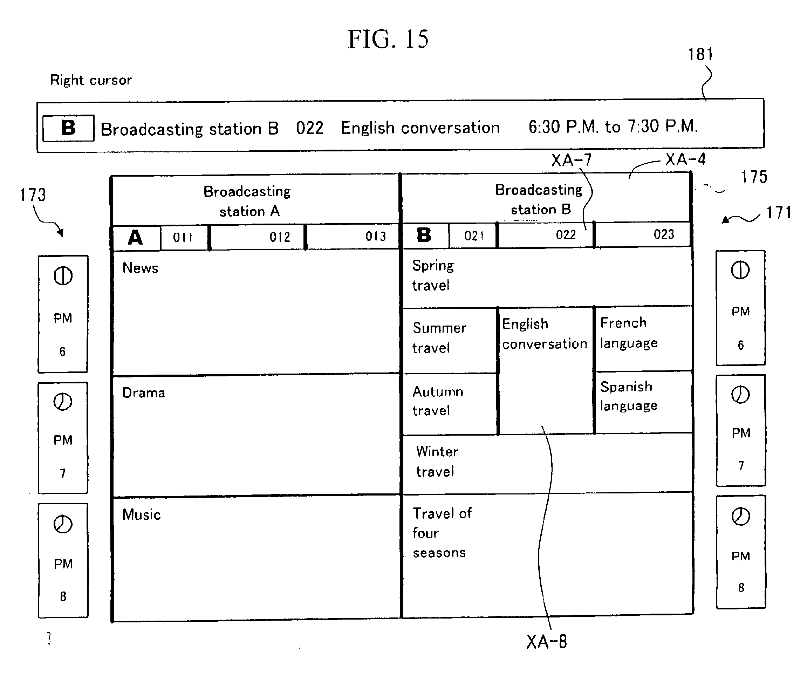

Figure 15 shows a transition example of an electronic program table display according to a mode in which program frames are uniformly allocated.

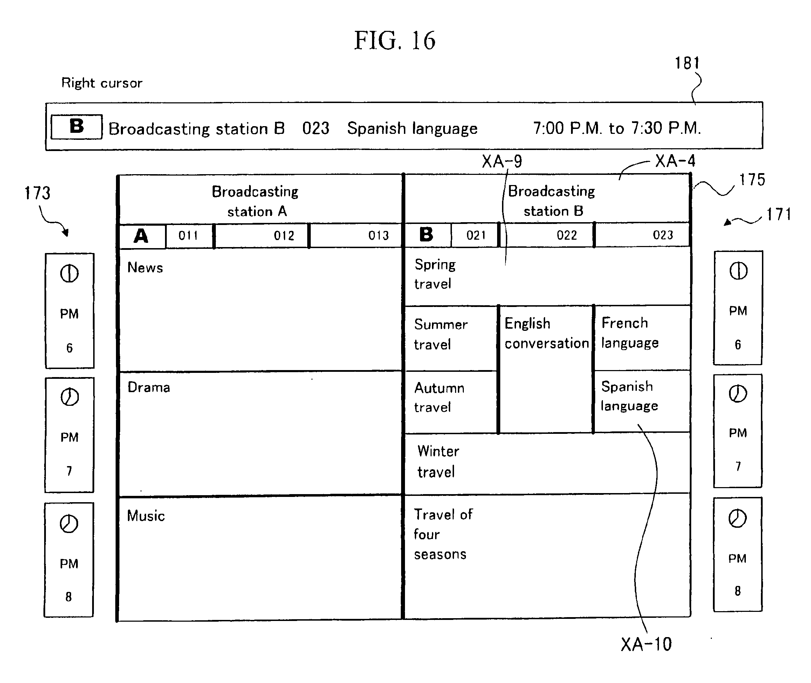

Figure 16 shows a transition example of an electronic program table display according to a mode in which program frames are uniformly allocated.

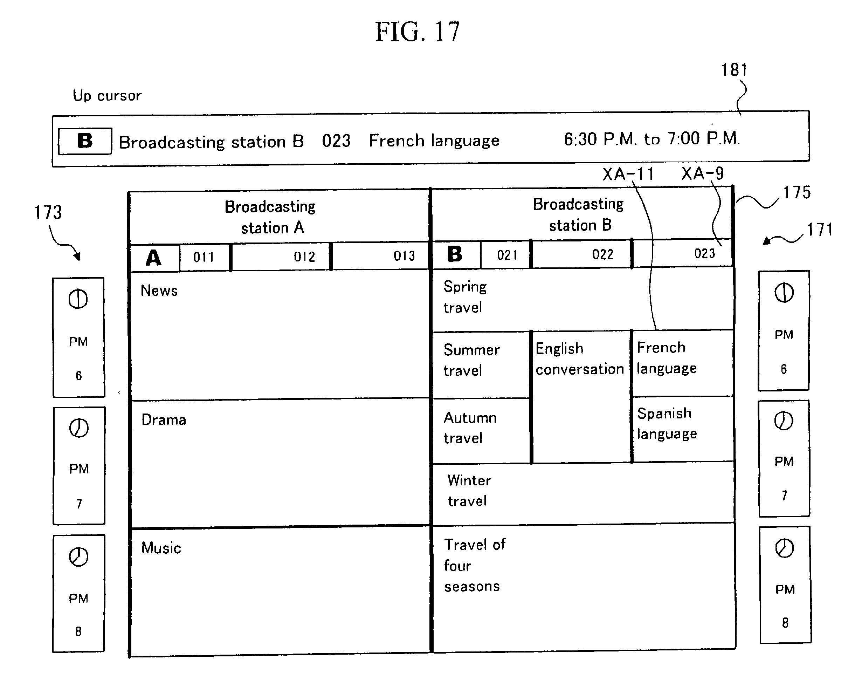

Figure 17 shows a transition example of an electronic program table display according to a mode in which program frames are uniformly allocated.

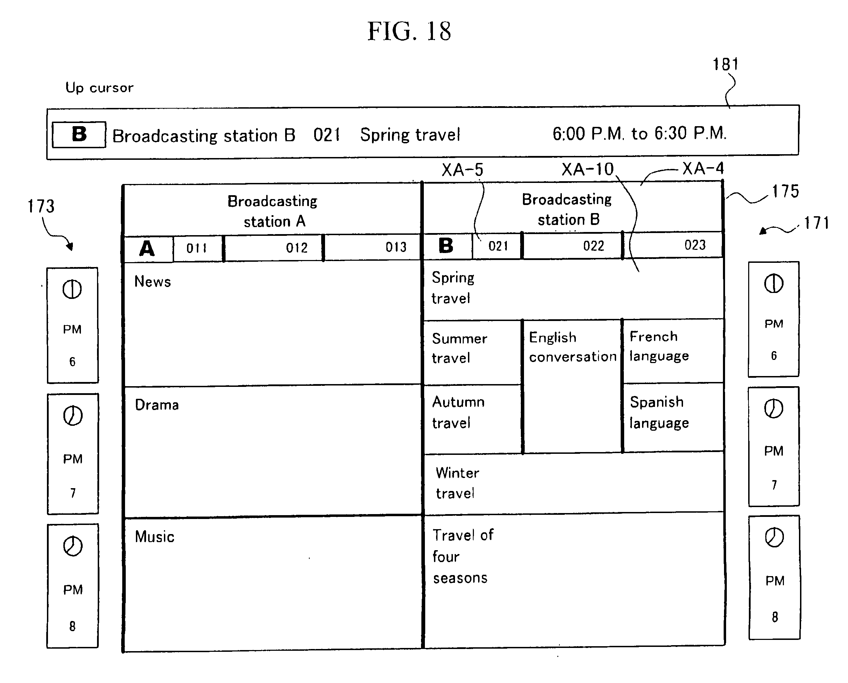

Figure 18 shows a transition example of an electronic program table display according to a mode in which program frames are uniformly allocated.

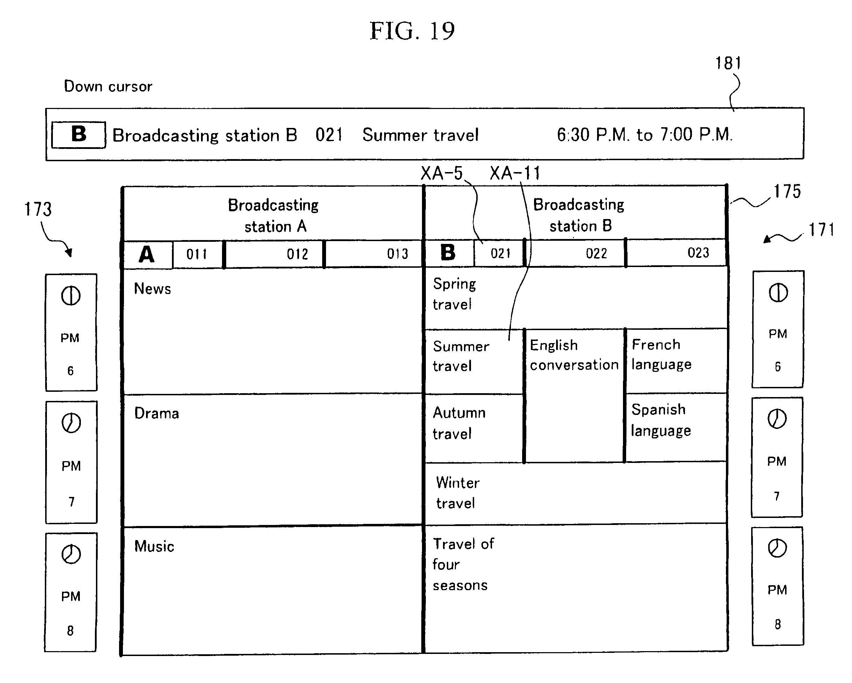

Figure 19 shows a transition example of an electronic program table display according to a mode in which program frames are uniformly allocated.

### Description of Symbols

- A: DIGITAL BROADCASTING RECEIVING APPARATUS
- 1: ANTENNA
- 3: DIGITAL BROADCASTING RECEIVING UNIT
- 5: HDMI INTERFACE UNIT
- 7: HDMI SIGNAL PROCESSING UNIT
- 11: DECODER
- 15: REMOTE CONTROLLER PHOTO-RECEPTION UNIT
- 17: CONTROL UNIT (CPU)
- 18: STORAGE UNIT
- 23: DISPLAY
- 25: VOICE SIGNAL PROCESSING UNIT
- 27: IMAGE SIGNAL PROCESSING UNIT

### Best Mode for Carrying Out the Invention

In the present description, "TS" is the abbreviation of Transport Stream, which is specified in the MPEG system standard (ISO/IEC 13818-1). A TS ID is an identifier allocated to each TS and is unique in a network. The same TS means that TS IDs are the same. Moreover, a channel of which first digit to discriminate programs is "1" is referred to as a representative channel.

A representative channel is defined by, for example, a TS information descriptor included in NIT (network information table) in the terrestrial digital broadcasting. It refers to a primary service which may be determined by manufacturers in the case of BS and CS. The display technique of an electronic program table relating to the present invention is characterized in that frames are created and disposed such that the areas defined by display frames of channels other than a representative channel are smaller compared with a display area defined by a display frame of the representative channel (which basically refers to any one channel in one broadcasting station or a channel having the smallest or largest service ID in one broadcasting station).

Hereafter, a digital broadcasting receiving apparatus according to an embodiment of the present invention will be described with reference to the drawings. Figures 1 and 2 show respectively an outline of a digital broadcasting receiving apparatus according to the present embodiment.

As shown in Figure 1, the digital broadcasting receiving apparatus A includes an antenna 1, a digital broadcasting receiving unit 3 including a tuner of digital broadcasting, an electronic program table creating unit 5, a decoder 11, a remote controller photo-reception unit 15, a voice signal processing unit 25 for performing the processing of voice signals, a speaker 21 for outputting voices based on the voice signal after the processing, an image signal processing unit 27 for processing image signals, a display 23 for outputting images based on the image signals after the processing, a control unit (CPU) 7 for controlling each function block through a bus line BL1, and storage units (ROM and RAM) 18 and 19 for storing programs for performing the below described processing and other information. The control unit 7 includes, for example, an electronic program table editing unit 7a which is processed based on a program.

As shown in Figure 2, the DVD (HDD) recorder (recording/reproducing apparatus) B includes an antenna 41, a digital tuner 43, a control unit 47, a remote controller photo-reception unit 51, a storage unit (HDD) 53, an HDMI interface unit 55, an electronic program table acquisition unit 57, an optical disk driving unit 63 such as a DVD, and an operation unit 67. The control unit 47 is provided with an electronic program table editing unit 47a which is operated by a program. Each of them can be operated by a corresponding remote control apparatus.

While the electronic program table is usable in any equipment, for example, if the equipment is compatible with the HDMI standard, the electronic program table can be displayed on the display 23 by connecting the both via an HDMI and using any remote control apparatus. The program information for creating an electronic program table may be extracted from the broadcast wave received by the above described digital broadcasting receiving unit, or may be separately acquired from the Internet etc.

Next, the editing process of an electronic program table will be described based on the flowchart shown in Figure 3. Figure 4 shows a display example of an electronic program table which is edited based on the editing process of electronic program table of the present embodiment and is displayed on a display. First, in step S1, a request for EPG display is made by a user using an operation button of a remote control apparatus, etc. Next, in step S2, determination is made on whether the display request is made in a mode to display only the program frame of a representative channel in a large size when there is a representative channel, or in a mode to display program frames in the same size regardless of whether or not the channel is a representative channel. When it is not the mode to display only the program frame of a representative channel in a large size (No), the process proceeds to step S3. A display example based on the processing of the conventional display mode of step S3 has been described above with reference to Figures 12 to 19. When it is the mode to display only the program frame of a representative channel in a large size (Yes), the process proceeds to step S4 and the information of all the services to be displayed for each broadcasting station, which is sectioned by the same supplier, the same TS, and a combination thereof, is acquired from the electronic program table information, and in step S5, a computation processing for allocating cells is performed. Next, in step S6, display frames to be allocated are created based on the computation. From the processing in step S6, in step S7, determination is made on whether or not there is any event sharing, and when there is any event sharing (Yes), in step S8, programs to be shared are integrated and displayed without changing the width. When there is no event sharing (No), in step S9, programs are displayed as they are without integrating them. Television channels which are within one TS and have the same broadcast ID are basically configured to have the same width regardless of the number of services within the TS.

In the following, one example of the computation processing by a computing unit in step S5 will be described.

Basic computation equation: $\left(D⁢i⁢s⁢p⁢l⁢a⁢y w⁢i⁢d⁢t⁢h o⁢f r⁢e⁢p⁢r⁢e⁢s⁢e⁢n⁢t⁢a⁢t⁢i⁢v⁢e c⁢h⁢a⁢n⁢n⁢e⁢l\right) = \left(d⁢i⁢s⁢p⁢l⁢a⁢y w⁢i⁢d⁢t⁢h o⁢f o⁢n⁢e b⁢r⁢o⁢a⁢d⁢c⁢a⁢s⁢t⁢i⁢n⁢g s⁢t⁢a⁢t⁢i⁢o⁢n\right) - \left(w⁢i⁢d⁢t⁢h o⁢f o⁢n⁢e c⁢h⁢a⁢n⁢n⁢e⁢l o⁢t⁢h⁢e⁢r t⁢h⁢a⁢n r⁢e⁢p⁢r⁢e⁢s⁢e⁢n⁢t⁢a⁢t⁢i⁢v⁢e c⁢h⁢a⁢n⁢n⁢e⁢l\right) \times \left(\left(t⁢h⁢e n⁢u⁢m⁢b⁢e⁢r o⁢f c⁢h⁢a⁢n⁢n⁢e⁢l⁢s o⁢f o⁢n⁢e b⁢r⁢o⁢a⁢d⁢c⁢a⁢s⁢t⁢i⁢n⁢g s⁢t⁢a⁢t⁢i⁢o⁢n\right)-1\right)$

### First example

When the number of channels of one broadcasting station including a representative channel is 3, the display width of one broadcasting station is 10 (arbitrary unit), and the channel width of channels other than the representative channels is 1 (the same unit), the width of the representative channel is determined as follows: $\left(Width of representative channel\right) = 10 - \left(1\times \left(3-1\right)\right) = 10 - 2 = 8$

### Second example

When the number of channels of one broadcasting station including a representative channel is 2, the display width of one broadcasting station is 10 (arbitrary unit), and the channel width of channels other than the representative channel is 1 (the same unit), the width of the representative channel can be determined as follows: $\left(Width of representative channel\right) = 10 - \left(1\times \left(2-1\right)\right) = 10 - 1 = 9$

As seen from those equations, the width in the channel axis direction for all the services displayed for each broadcasting station, which is in the same TS and of the same supplier, is fixed. The width of a representative channel is configured to be explicitly larger than those of other channels. The width is such that the former is a level of width in which displaying program names etc. can be satisfactorily achieved and the latter is a level of width in which displaying program names is difficult. This point will be described with reference to Figure 4. As shown in Figure 4, a display X of electronic program table according to the present embodiment includes, for example, a matrix-form arrangement 71 with a time axis 73 as a longitudinal axis and with a channel axis (axis sectioned for each broadcasting station) 75 as a lateral axis.

Putting Figure 4 in contrast with Figure 12 for the comparison with a conventional arrangement, in the display example shown in Figure 12, in the two hours from the period between 6 and 7 p.m. to the period between 7 and 8 p.m. of the same broadcasting station B, when three different programs are broadcast at service channels of 021, 022 and 023 in the broadcasting station B, information on three different programs of 021, 022 and 023 are respectively displayed using uniform display frames for three services in the program display frame of one broadcasting station B as shown in 177-1 to 177-5. In this case, the width of one broadcasting station is proportional to the number of services.

In contrast to this, in the display example shown in Figure 4, among three different programs between 6 and 7 p.m. and between 7 and 8 p.m. of the broadcasting station B, the channel 021, which is a representative channel, is allocated with a width of 8 (77-3 and 77-4) with respect to the entire width of 10 of the broadcasting station B, and channels 022 (77-6) and 023 (77-7) are respectively allocated with a width of 1 with respect to the entire width 10. The frames for sectioning each channel are fixed. It is preferable that the program information to be displayed within a frame (within a cell) is displayed only for a representative channel which has a sufficient area, and is not displayed for other areas.

Moreover, regarding narrow areas, in order to making their presence conspicuous, it is possible to improve the ease of visual recognition while being identified, by coloring only narrow areas with a primary color etc., using color-coding, adding a hatch pattern thereon, adding a unique mark thereon and so on. In the case of a representative channel, and when the cursor is not put on a narrow area, the color arrangement of the cells for a narrow area is performed by the same algorithm as that for a representative channel, and even when the cursor is put thereon as well, the color arrangement of the cells for a narrow area may be performed by the same color as that when the cursor is put on a representative channel.

In this way, fixing the allocation width in the channel axis direction for each broadcasting station will enable to predetermine the allocation width in the channel axis direction for each broadcasting station so that the frames for sectioning channels will not be displaced every time the cursor is moved in horizontal direction and therefore are easy to be seen, and next performing the above described computation based on the number of channels will enable to predetermine the allocation of the program display frames for programs in the same broadcasting station. Since when there is any event sharing, programs may be integrated to be displayed based on subsequent judgment, rapid displaying can be achieved. Moreover, displaying an electronic program table by predetermining a program table frame will enable a viewer to quickly recognize the possibility that a plurality of different programs are present in the same time zone regarding respective broadcasting station. It is noted that predetermining the arrangement of the program display frame in the same broadcasting station be performed in the ascending order from smaller number in the channel axis direction will be advantageous in that since the display is made in a fixed arrangement, it is easy for a user to recognize it. Moreover, compared with the configuration shown in Figure 12, the width in the channel axis direction can be decreased, and information relating to more broadcasting stations can be displayed on a display, the browsability of the electronic program table will be advantageously improved.

Returning to Figure 3, in step S10, determination is made on whether or not focus is placed on any of the program display fields. When it is determined that focus is placed (Yes), the process proceeds to step S11, and the details of the program on which focus is placed will be displayed on a large scale in a detailed display field 81 provided in the margin of the program display field in a large size. Finally, the editing/display processing of electronic program table is finished (step S 12).

Hereinafter, description will be made on a display example when an area on which focus is placed is moved. As shown in Figure 5, when focus is placed on a program display area A1 corresponding to between 7 and 8 p.m. of the broadcasting station A in the electronic program table 71 shown in Figure 4, a display of "broadcasting station A", the channel "011", "Drama" and "7:00 p.m. to 8:00 p.m." is performed in the detailed display field 81, and it becomes possible to proceed to operation of viewing, or starting or reserving image recording by the user.

Next, upon performing the operation of moving focus by right cursor, configuration is made such that focus is placed on the 021 channel, which is between 7 and 8 p.m., that is, in the same time zone as in Figure 5, and is the lowest channel number within the programs of the broadcasting station B on the right side of the broadcasting station A (and is also a representative channel in this case). When the time zone is divided, configuration is made such that focus is placed on "Autumn travel" in the area A2 which is a program area of which starting time is close to 7:00 of "Drama". In this case as well, there are advantages in that since the frame itself of the broadcasting station B is not changed, visual recognition thereof is easy for the user and eye fatigue will be reduced, and moreover since the movement of the focused area in the horizontal cursor movement is in the same direction as that of cursor operation, there is no alienation between the user operation and the direction of cursor movement, and cognitive burden on the user is low. Of course, in the detailed display area 81, detailed information on "Autumn travel" is displayed. Next, when operation by right cursor is performed from the display of Figure 6, focus is placed on the area A3 on the right side of the area A2 as shown in Figure 7. By viewing the detailed area 81, it is seen that this program is "English conversation" of the 022 channel of the broadcasting station B, which is to be broadcast from 6:30 p.m. to 7:30 p.m. In this case, even if the same information is not displayed in the area A3 within the program display area, it is displayed in the detailed display area 81 and therefore is readily understandable for users. Since there are few switching of display, there is an advantage that it is rather easy to see.

When right cursor is further used from the display of Figure 7, a program from 7 p.m. is displayed in an area A4 as shown in Figure 8. In this occasion, the reason why focus is not placed on the program from 6:30, but on the program from 7:00 is that focus has been placed on the program from 7:00 two steps earlier in Figure 6. In this way, when an area spanning times is selected, determination is made on which area focus is to be placed with reference to the previous display state. That is, when right cursor is successively operated, the time zone on which focused is previously placed is stored so that the focused time zone during a series of operations is kept the same. The same processing may be performed for the case of left cursor.

As shown in Figure 9, when operation by up cursor is performed from Figure 8, focus is placed on an area A5 of the immediately preceding program in the same program 023. Further, when operation by up cursor is performed, as shown in Figure 10, focus is placed on "Spring travel" which is a program 021 in the immediately preceding time zone of the same broadcasting station B over the entire width of the channel axis of the broadcasting station B as shown in an area A6. Next, when operation of down cursor is performed, as shown in Figure 11, focus is placed on the area A7 of the program immediately after the program 021. In this case, it is configured such that focus is placed on a program corresponding to the program of the immediately preceding channel.

As described so far, in the present embodiment, configuration is made such that the display area of a broadcasting station, which includes a representative channel and channels other than the representative channel, has the same width, and a channel with event sharing and a channel without event sharing, which is of a type of one service in one broadcasting station, have the same width.

] It may also be configured such that a display mode shown in the display example described in the present embodiment and a conventional separate display mode (such as a scheme in which a representative channel and channels other than the representative channel are displayed in the same width, and a scheme in which only the representative channel is displayed) are switched by a menu and key manipulation, etc. In this occasion, it may be configured such that any of the above described display modes are selected by a menu manipulation, etc. independently (individually) for only a specific broadcasting station designated by the user, or for all broadcasting stations as a whole.

Moreover, the display mode as described above may be configured independently for each network (such as a terrestrial digital, CS digital, and BS digital networks), and as a whole for each network. For example, configuration may be such that only the terrestrial digital broadcasting adopts the display mode according to the present embodiment. Moreover, it may be configured such that a network as a whole adopts the above described display mode, or each broadcasting station independently sets the above described display mode individually by using a menu.

Moreover, the above described configuration may be taken as a whole for each medium (a television service, radio service, and data service). For example, only the television service may take on the above described configuration.

It is noted that when the number of display stations in a region is small such as in the terrestrial digital broadcasting, channels other than the representative channel may be displayed as needed within a browsable range. In that occasion, it is preferable that broadcasting stations which conduct multi-channel broadcasting such as a formation without event sharing are preferentially displayed in a browsable form. When a spotted formation is performed, it is preferable that the service number on which the cursor is put on is displayed or displayed in a highlight in the area where a broadcasting station logo is to be displayed, so that the selected channel in the broadcasting station is emphasized to be easily seen. It is noted that when the display of a one-touch button, or a one-touch key for the emphasized service is not allocated, the display of an icon button indicating a one-touch key may be deactivated or grayed down so as not to be emphasized.

It is noted that although, in the above described examples, description has been made on the case in which the representative channel is displayed in a larger size, the case in which an arbitrary channel is selected and the display frame for the arbitrary channel is made larger will not be excluded. Any channel designated by a user may be a representative channel. Therefore, such cases are included in the scope of the present invention. Moreover, the EPG display may be one in which the time axis and the channel axis are replaced with each other.

Moreover, since the digital broadcasting receiving apparatus includes a television receiving apparatus, a recording/reproducing apparatus, a personal computer, etc., the name and form of the product will not limit the invention.

### Industrial Applicability

The present invention is applicable to digital broadcasting receiving apparatuses.

## Claims

1. A digital broadcasting receiving apparatus, comprising:
a program information acquisition unit (5, 57) for acquiring program information; and
an electronic program table editing unit (7a, 47a) for editing a program table based on the program information acquired by said program information acquisition unit (5, 57) and for controlling a focus movement on a display (23) displaying the program table, wherein:
the program table has a matrix-form arrangement (71) with a time axis (73) as a longitudinal axis and with a channel axis (75) sectioned for each broadcasting station as a lateral axis in a channel axis direction,
**characterized in that**
the electronic program table editing unit (7a, 47a) is configured to control the display of the program table such that
even when one and the same program provider has a plurality of channels to provide programs, the width of each section in the channel axis direction is kept the same independent of the number of services within a transport stream;
a first width of a first program information display area in said channel axis direction of a representative channel selected from said plurality of channels is larger than a second width of a second program information display area of a channel other than said representative channel; and
said first width and said second width are fixed independently of a focus movement in said first and second program information display areas.

2. The digital broadcasting receiving apparatus according to claim 1, further comprising:
a computing unit for performing a computation to predetermine said first and second widths.

3. The digital broadcasting receiving apparatus according to claim 2, wherein
said computing unit is configured to compute the first and second widths based on the following computing equation: $\left(f⁢i⁢r⁢s⁢t w⁢i⁢d⁢t⁢h\right) = \left(w⁢i⁢d⁢t⁢h o⁢f a sect⁢i⁢o⁢n o⁢f t⁢h⁢e c⁢h⁢a⁢n⁢n⁢e⁢l a⁢x⁢i⁢s \left(75\right) a⁢s⁢s⁢i⁢g⁢n⁢e⁢d t⁢o o⁢n⁢e b⁢r⁢o⁢a⁢d⁢c⁢a⁢s⁢t⁢i⁢n⁢g s⁢t⁢a⁢t⁢i⁢o⁢n\right) - \left(seco⁢n⁢d w⁢i⁢d⁢t⁢h\right) \times \left(\left(t⁢h⁢e n⁢u⁢m⁢b⁢e⁢r o⁢f c⁢h⁢a⁢n⁢n⁢e⁢l⁢s o⁢f o⁢n⁢e b⁢r⁢o⁢a⁢d⁢c⁢a⁢s⁢t⁢i⁢n⁢g s⁢t⁢a⁢t⁢i⁢o⁢n\right)-1\right) .$

4. The digital broadcasting receiving apparatus according to any of claims 1 to 3, wherein
said second width is only a width within the limits of which even one character cannot be displayed.

5. The digital broadcasting receiving apparatus according to any of claims 1 to 4, wherein
the second program information display area is displayed in a visually recognizable form.

6. The digital broadcasting receiving apparatus according to any of claims 1 to 5, wherein
the electronic program table editing unit (7a, 47a) is further configured to control display of the program table such that
when a cursor is not put on said representative channel, coloring of the program information display area is performed by the same algorithm as that of said representative channel, and when the cursor is put on the second program information display area, coloring of the second program information display area is performed with the same color as that of the case in which the cursor is put on said representative channel.

7. The digital broadcasting receiving apparatus according to any of claims 1 to 6, wherein
the electronic program table editing unit (7a, 47a) is further configured to control display of the program table such that
when focus is placed on the second program information display area a detailed display area (81) for displaying detailed program information of said second program information display area is created in a separate column.

8. The digital broadcasting receiving apparatus according to any of claims 1 to 7, wherein
the electronic program table editing unit (7a, 47a) is further configured to control display of the program table such that
in order to keep a selected time zone the same in a series of operations on which focus is moved along the channel axis (75), a time zone on which focus has been previously placed is stored when, in a first step, a channel spanning more time zones is selected by the cursor, and
when in a further step focus is moved to a channel where the spanning time zone is divided,
determination of that area focus is to be placed is made with reference to the stored time zone.

9. The digital broadcasting receiving apparatus according to any of claims 1 to 8, wherein
the electronic program table editing unit (7a, 47a) is further configured to control display of the program table such that it is operated either in
a mode to display only said representative channel in a large width, or in a mode to display all the channels in the same width.

10. The digital broadcasting receiving apparatus according to any of claims 1 to 9, wherein
the electronic program table editing unit (7a, 47a) is further configured to control display of the program table such that
even if there is no event sharing in a channel, the same channel is displayed in the manner for a channel in which all events are shared by the channel, as long as no event is presented on the display (23).

## Patentansprüche

1. Digitale Rundfunkempfangsvorrichtung, die enthält:
eine Programminformations-Erfassungseinheit (5, 57), um Programminformationen zu erfassen; und
eine elektronische Programmtafel-Editierungseinheit (7a, 47a), um eine Programmtafel anhand der durch die Programminformations-Erfassungseinheit (5, 57) erfassten Programminformationen zu editieren und um eine Fokusbewegung auf einer Anzeige (23), die die Programmtafel anzeigt, zu steuern, wobei:
die Programmtafel eine Matrixformanordnung (71) hat, die eine Zeitachse (73) als Längsachse und eine für jede Rundfunkstation unterteilte Kanalachse (75) als seitliche Achse in einer Kanalachsenrichtung besitzt,
**dadurch gekennzeichnet, dass**
die elektronische Programmtafel-Editierungseinheit (7a, 47a) konfiguriert ist, um die Anzeige der Programmtafel in der Weise zu steuern, dass
selbst dann, wenn ein und derselbe Programmanbieter mehrere Kanäle besitzt, um Programme bereitzustellen, die Breite jedes Abschnitts in der Kanalachsenrichtung unabhängig von der Anzahl von Diensten in einem Transportstrom gleich gehalten wird;
eine erste Breite eines ersten Programminformations-Anzeigebereichs in der Kanalachsenrichtung eines repräsentativen Kanals, der aus den mehreren Kanälen ausgewählt wird, größer ist als eine zweite Breite eines zweiten Programminformations-Anzeigebereichs eines von dem repräsentativen Kanal verschiedenen Kanals; und
die erste Breite und die zweite Breite unabhängig von einer Fokusbewegung in dem ersten und in dem zweiten Programminformations-Anzeigebereich fest sind.

2. Digitale Rundfunkempfangsvorrichtung nach Anspruch 1, die ferner enthält:
eine Recheneinheit, um eine Berechnung auszuführen, um die erste und die zweite Breite vorzugeben.

3. Digitale Rundfunkempfangsvorrichtung nach Anspruch 2, wobei
die Recheneinheit konfiguriert ist, um die erste und die zweite Breite anhand der folgenden Berechnungsgleichung zu berechnen: $\left(e⁢r⁢s⁢t⁢e B⁢r⁢e⁢i⁢t⁢e\right) = \left(B⁢r⁢e⁢i⁢t⁢e e⁢i⁢n⁢e⁢s A⁢b⁢s⁢c⁢h⁢n⁢i⁢t⁢t⁢s d⁢e⁢r K⁢a⁢n⁢a⁢l⁢a⁢c⁢h⁢s⁢e \left(75\right), d⁢e⁢r e⁢i⁢n⁢e⁢r R⁢u⁢n⁢d⁢f⁢u⁢n⁢k⁢s⁢t⁢a⁢t⁢i⁢o⁢n z⁢u⁢g⁢e⁢w⁢i⁢e⁢s⁢e⁢n i⁢s⁢t\right) - \left(z⁢w⁢e⁢i⁢t⁢e B⁢r⁢e⁢i⁢t⁢e\right) \times \left(\left(A⁢n⁢z⁢a⁢h⁢l v⁢o⁢n K⁢a⁢n⁢{a}^{¨}⁢l⁢e⁢n e⁢i⁢n⁢e⁢r R⁢u⁢n⁢d⁢f⁢u⁢n⁢k⁢s⁢t⁢a⁢t⁢i⁢o⁢n\right)-1\right) .$

4. Digitale Rundfunkempfangsvorrichtung nach einem der Ansprüche 1 bis 3, wobei
die zweite Breite nur eine Breite ist, innerhalb der Grenzen derselben selbst ein Zeichen nicht angezeigt werden kann.

5. Digitale Rundfunkempfangsvorrichtung nach einem der Ansprüche 1 bis 4, wobei
der zweite Programminformations-Anzeigebereich in einer visuell erkennbaren Form angezeigt wird.

6. Digitale Rundfunkempfangsvorrichtung nach einem der Ansprüche 1 bis 5, wobei
die elektronische Programmtafel-Editierungseinheit (7a, 47a) ferner konfiguriert ist, um die Anzeige der Programmtafel in der Weise zu steuern, dass
dann, wenn ein Cursor nicht auf den repräsentativen Kanal gesetzt wird, ein Färben des Programminformations-Anzeigebereichs durch denselben Algorithmus wie jener des repräsentativen Kanals erfolgt, und dann, wenn der Cursor auf den zweiten Programminformations-Anzeigebereich gesetzt wird, ein Färben des zweiten Programminformations-Anzeigebereichs mit derselben Farbe wie jene in dem Fall, in dem der Cursor auf den repräsentativen Kanal gesetzt wird, erfolgt.

7. Digitale Rundfunkempfangsvorrichtung nach einem der Ansprüche 1 bis 6, wobei
die elektronische Programmtafel-Editierungseinheit (7a, 47a) ferner konfiguriert ist, um die Anzeige der Programmtafel in der Weise zu steuern, dass dann, wenn der Fokus auf den zweiten Programminformations-Anzeigebereich gesetzt wird, ein detaillierter Anzeigebereich (81) zum Anzeigen detaillierter Programminformationen des zweiten Programminformations-Anzeigebereichs in einer separaten Spalte erzeugt wird.

8. Digitale Rundfunkempfangsvorrichtung nach einem der Ansprüche 1 bis 7, wobei
die elektronische Programmtafel-Editierungseinheit (7a, 47a) ferner konfiguriert ist, um die Anzeige der Programmtafel in der Weise zu steuern, dass,
um eine ausgewählte Zeitzone in einer Reihe von Operationen, in denen der Fokus längs der Kanalachse (75) bewegt wird, beizubehalten, eine Zeitzone, auf die der Fokus früher gesetzt worden war, gespeichert wird, wenn in einem ersten Schritt ein Kanal, der mehrere Zeitzonen überspannt, durch den Cursor gewählt wird, und
dann, wenn in einem weiteren Schritt der Fokus zu einem Kanal bewegt wird, in dem die überspannte Zeitzone unterteilt ist,
die Bestimmung, dass der Bereichsfokus anzuordnen ist, mit Bezug auf die gespeicherte Zeitzone erfolgt.

9. Digitale Rundfunkempfangsvorrichtung nach einem der Ansprüche 1 bis 8, wobei
die elektronische Programmtafel-Editierungseinheit (7a, 47a) ferner konfiguriert ist, um die Anzeige der Programmtafel in der Weise zu steuern, dass sie entweder
in einer Betriebsart, in der nur der repräsentative Kanal mit einer großen Breite angezeigt wird, oder
in einer Betriebsart, in der sämtliche Kanäle mit der gleichen Breite angezeigt werden,
betrieben wird.

10. Digitale Rundfunkempfangsvorrichtung nach einem der Ansprüche 1 bis 9, wobei
die elektronische Programmtafel-Editierungseinheit (7a, 47a) ferner konfiguriert ist, um die Anzeige der Programmtafel in der Weise zu steuern, dass
selbst dann, wenn es keine gemeinsame Nutzung eines Ereignisses in einem Kanal gibt, dieser Kanal wie ein Kanal angezeigt wird, in dem sämtliche Ereignisse von dem Kanal gemeinsam genutzt werden, solange auf der Anzeige (23) kein Ereignis dargestellt wird.

## Revendications

1. Appareil récepteur et de diffusion numérique, comprenant :
une unité d'acquisition d'informations de programme (5, 57) permettant d'acquérir des informations de programme, et
une unité d'édition de tableau de programme électronique (7a, 47a) permettant d'éditer un tableau de programme d'après les informations de programme acquises par ladite unité d'acquisition d'informations de programme (5, 57), et permettant de commander un mouvement de foyer sur un affichage (23) affichant le tableau de programme, dans lequel :
le tableau de programme présente un agencement (71) en forme de matrice avec un axe de temps (73) comme axe longitudinal, et avec un axe de canal (75) sectionné pour chaque station de diffusion comme axe latéral dans une direction d'axe de canal,
**caractérisé en ce que**
l'unité d'édition de tableau de programme électronique (7a, 47a) est configurée pour commander l'affichage du tableau de programme de sorte que
même lorsqu'un seul et même fournisseur de programme comporte une pluralité de canaux pour fournir des programmes, la largeur de chaque section dans la direction d'axe de canal est maintenue identique, indépendamment du nombre de services au sein d'un courant de transport ;
une première largeur d'une première région d'affichage d'informations de programme dans ladite direction d'axe de canal d'un canal représentatif choisi dans ladite pluralité de canaux est plus grande qu'une deuxième largeur d'une deuxième région d'affichage d'informations de programme d'un canal autre que ledit canal représentatif, et
ladite première largeur et ladite deuxième largeur sont fixées indépendamment d'un mouvement de foyer dans lesdites première et deuxième régions d'affichage d'informations de programme.

2. Appareil récepteur et de diffusion numérique selon la revendication 1, comprenant en outre :
une unité de calcul permettant d'effectuer un calcul afin de prédéterminer lesdites première et deuxième largeurs.

3. Appareil récepteur et de diffusion numérique selon la revendication 2, dans lequel
ladite unité de calcul est configurée pour calculer les première et deuxième largeurs d'après l'équation de calcul suivante : $\left(p⁢r⁢e⁢m⁢i⁢è⁢r⁢e l⁢arg⁢e⁢u⁢r\right) = \left(l⁢arg⁢e⁢u⁢r {d}^{′}⁢u⁢n⁢e sec⁡t⁢i⁢o⁢n d⁢e {l}^{′}⁢a⁢x⁢e d⁢e c⁢a⁢n⁢a⁢l \left(75\right) a⁢t⁢t⁢r⁢i⁢b⁢u⁢é à u⁢n⁢e s⁢t⁢a⁢t⁢i⁢o⁢n d⁢e d⁢i⁢f⁢f⁢u⁢s⁢i⁢o⁢n\right) - \left(d⁢e⁢u⁢x⁢i⁢è⁢m⁢e l⁢arg⁢e⁢u⁢r\right) \times \left(\left(l⁢e n⁢o⁢m⁢b⁢r⁢e d⁢e c⁢a⁢n⁢a⁢u⁢x {d}^{′}⁢u⁢n⁢e s⁢t⁢a⁢t⁢i⁢o⁢n d⁢e d⁢i⁢f⁢f⁢u⁢s⁢i⁢o⁢n\right)-1\right) .$

4. Appareil récepteur et de diffusion numérique selon l'une quelconque des revendications 1 à 3, dans lequel
ladite deuxième largeur est seulement une largeur dans les limites de laquelle même un seul caractère ne peut pas être affiché.

5. Appareil récepteur et de diffusion numérique selon l'une quelconque des revendications 1 à 4, dans lequel
la deuxième région d'affichage d'informations de programme est affichée sous une forme visuellement reconnaissable.

6. Appareil récepteur et de diffusion numérique selon l'une quelconque des revendications 1 à 5, dans lequel
l'unité d'édition de tableau de programme électronique (7a, 47a) est en outre configurée pour commander l'affichage du tableau de programme de sorte que
lorsqu'un curseur n'est pas positionné sur ledit canal représentatif, une coloration de la région d'affichage d'informations de programme est effectuée par le même algorithme que celui du canal représentatif, et lorsque le curseur est positionné sur la deuxième région d'affichage d'informations de programme, une coloration de la deuxième région d'affichage d'informations de programme est effectuée avec la même couleur que celle utilisée dans le cas où le curseur est positionné sur ledit canal représentatif.

7. Appareil récepteur et de diffusion numérique selon l'une quelconque des revendications 1 à 6, dans lequel
l'unité d'édition de tableau de programme électronique (7a, 47a) est en outre configurée pour commander l'affichage du tableau de programme de sorte que
lorsque le foyer est placé sur la deuxième région d'affichage d'informations de programme, une région d'affichage détaillée (81) permettant d'afficher les informations de programme détaillées de ladite deuxième région d'affichage d'informations de programme est créée dans une colonne séparée.

8. Appareil récepteur et de diffusion numérique selon l'une quelconque des revendications 1 à 7, dans lequel
l'unité d'édition de tableau de programme électronique (7a, 47a) est en outre configurée pour commander l'affichage du tableau de programme de sorte que
afin de maintenir à l'identique une zone horaire choisie dans une série de fonctionnements sur lesquels le foyer est déplacé le long de l'axe de canal (75), une zone horaire sur lequel le foyer a été précédemment placé est stockée, lorsque dans une première étape, un canal couvrant plus de zones horaires est choisi par le curseur,
lorsque dans une étape supplémentaire, le foyer est déplacé vers un canal où la zone horaire de couverture est divisée,
la détermination de cette région où le foyer doit être placé est effectuée en se référant à la zone horaire stockée.

9. Appareil récepteur et de diffusion numérique selon l'une quelconque des revendications 1 à 8, dans lequel
l'unité d'édition de tableau de programme électronique (7a, 47a) est en outre configurée pour commander l'affichage du tableau de programme de sorte qu'il fonctionne soit
dans un mode pour afficher seulement ledit canal représentatif dans une grande largeur, soit
dans un mode pour afficher tous les canaux dans la même largeur.

10. Appareil récepteur et de diffusion numérique selon l'une quelconque des revendications 1 à 9, dans lequel
l'unité d'édition de tableau de programme électronique (7a, 47a) est en outre configurée pour commander l'affichage du tableau de programme de sorte que
même s'il n'y a aucun partage d'évènement dans un canal, le même canal est affiché comme pour un canal dans lequel tous les évènements sont partagés par le canal, tant qu'aucun évènement n'est présenté sur l'affichage (23).
